# EUROPÄISCHE PATENTSCHRIFT

(11) **EP 1 439 626 B1**
(45) Veröffentlichungstag und Bekanntmachung des Hinweises auf die Patenterteilung: **07.05.2008**
(21) Anmeldenummer: 03028516.7
(22) Anmeldetag: 10.12.2003
(51) Int. Cl.: H02K 1/27

(54) **Anordnung von Permanentmagneten für eine Synchronmaschine**
Arrangement of permanent magnets for a synchronous machine
Dispositf à aimants permanents pour une machine synchrone

(30) Priorität: 14.01.2003 DE 10301079
(43) Veröffentlichungstag der Anmeldung: 21.07.2004
(73) Patentinhaber: SIEMENS AKTIENGESELLSCHAFT, 80333 München (DE)
(72) Erfinder: Knauff, Axel, 97702 Münnerstadt (DE); Sopp, Helmut, 97650 Fladungen (DE)

(56) Entgegenhaltungen:
- EP-A- 1 017 152
- WO-A-98/15048
- WO-A-02/073788
- US-A- 4 472 650

## Beschreibung

Die Erfindung betrifft eine flächige Anordnung von Permanentmagneten und deren Verwendung bei permanenterregten Synchronmotor.

Ein Standardläufer einer permanentmagneterregten Synchronmaschine besteht aus einem magnetflussleitendem Teil im Innern des Standardläufers, den Permanentmagneten und einer Vorrichtung zur Aufnahme der Fliehkräfte, in der Regel einer Bandage. Bisher wurden die Läuferpakete aufwendig bandagiert und als geblechte Läufermagneteinheit auf Wellen montiert. Das führte zu einer Vielzahl von Läuferausführungen im Bezug auf Achslochdurchmesser, Baulänge usw. der verschiedensten permanenterregten Synchronmaschinen.

Um die Vielzahl der Läufermagneteinheiten zu reduzieren werden gemäß der JP 11 07 040 1A einzelne Permanentmagnete direkt auf eine Welle aufgebracht. Dies erfordert einen erhöhten Montageaufwand beim Kunden vor Ort.

Der Erfindung liegt demnach die Aufgabe zugrunde, Permanentmagnete derart anzuordnen und eine Läufereinheit einer Synchronmaschine zu schaffen, dass der Aufwand beim Kunden minimiert und die Herstellung von Läufern vereinfacht wird.

Die Lösung der gestellten Aufgabe gelingt durch eine Anordnung nach Anspruch 1 und eine permanenterregte Synchronmaschine nach Anspruch 5.

Die erfindungsgemäße Anordnung gestattet eine Vorfertigung, die dem Kunden ermöglicht in einfacher Art und Weise einen Läufer einer permanenterregten Synchronmaschine zu schaffen, in dem die Anordnung z.B. auf eine Hohlwelle aufgebracht und dort mit geeigneten Mitteln fixiert wird. Dabei kann die Anordnung aufgeschrumpft werden oder aber auch stoff- und/oder formschlüssig angebracht sein. Ein Formschluss ist insbesondere dann geeignet, wenn es sich nur um einzelne Module handelt die in Umfangsrichtung angeordnet sind und sich in axialer Richtung erstrecken.

Besonders vorteilhaft ist es die Permanentmagnete zwischen zwei Trägermaterialien insbesondere dünnen Hülsen zu positionieren. Dabei ist das Trägermaterial in Richtung Luftspalt amagnetisch, insbesondere ein Material mit Kohlefaseranteilen beispielsweise CFK um auch die Fliehkräfte aufnehmen zu können. Das Trägermaterial der inneren Hülse ist aus weichmagnetischem Material. Vorteilhafter Weise sind dabei die Wandstärken sehr viel dünner als die radiale Dicke der Permanentmagnete.

Einen vorteilhaften geometrischen Aufbau einer Läufereinheit stellen folgende Verhältnisse dar:
Radiale Dicke der Permanentmagneten: 3,5 mm:
   Amagnetisches Trägermaterial (Bandage): 0,5 - 1,0 mm, weichmagnetisches Material: 0,5 mm.

Die Anordnung kann zusätzlich mit geeignetem Materialien vergossen werden, um so die Fixierung der Anordnung an der Welle zu verbessern. Der magnetische Rückfluss der Permanentmagnete erfolgt über die Welle.

Durch den Einsatz der erfindungsgemäßen Anordnungen ist es möglich, z.B. verschiedene Werkzeugmaschinenwellen direkt mit den Anordnungen modulartig zu bestücken, was den Einsatz und den Aufbau von Läuferpaketen überflüssig macht. Durch die einzelnen Anordnungen lassen sich somit Einheiten schaffen, die modular zu einer gewünschten Baulänge zusammensetzbar sind.

In vorteilhafter Weise werden durch formschlüssige Verbindungen der Anordnung mit der Welle auch Varianten möglich. Durch Einsatz geeigneter Materialien lassen sich die gewünschten Einsatzgebiete bezüglich ihrer höchsten Drehzahl optimieren.

Die einzelnen Anordnungen können dabei unterschiedlich aufgebaut sein. Durch eine exakte Hintereinanderreihung gleichartiger Permanentmagnete besteht die Möglichkeit, dass die Permanentmagnete über ihre Zwischenräume flexibel dem Wellendurchmesser angepasst werden können. Falls die Permanentmagnete versetzt über ihre axiale Länge angeordnet sein sollten, ermöglicht dies eine Polschrägung, so dass Rastmomente der permanenterregten Synchronmaschine reduziert werden.

Die Permanentmagnete sind aufgrund wirtschaftlicher Erwägungen im Normalfall quaderförmig ausgeführt. Ebenso ist es aber auch möglich andere Formen zu realisieren. Mit Permanentmagnete mit einer leicht konischen Form ist es möglich, eine Anpassung an einen vorgegebenen Wellenradius zu erhalten.

Die Erfindung sowie weitere vorteilhafte Ausgestaltungen der Erfindung gemäß Merkmal der Unteransprüche werden im folgenden anhand schematisch dargestellte Ausführungsbeispiele in der Zeichnung näher erläutert. Darin zeigen:

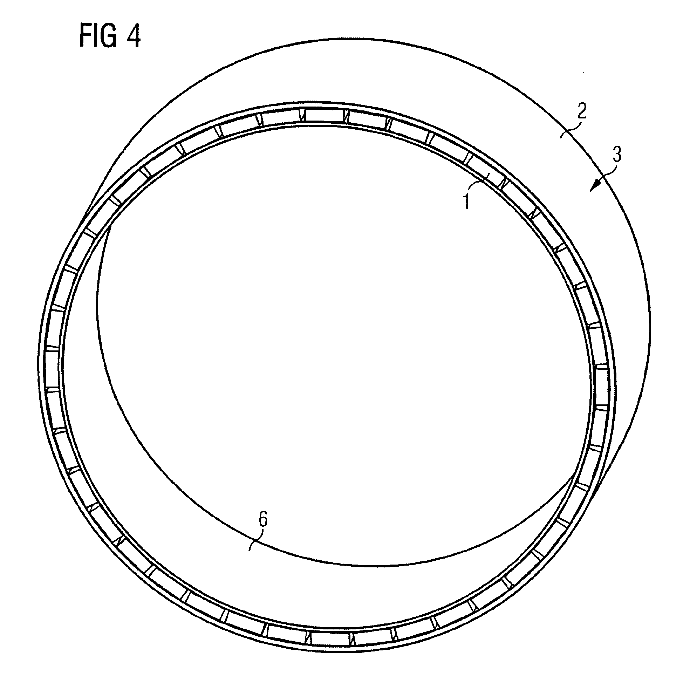

- FIG 4 bis 7: zeigen erfindungsgemäße Anordnungen von Permanentmagneten,

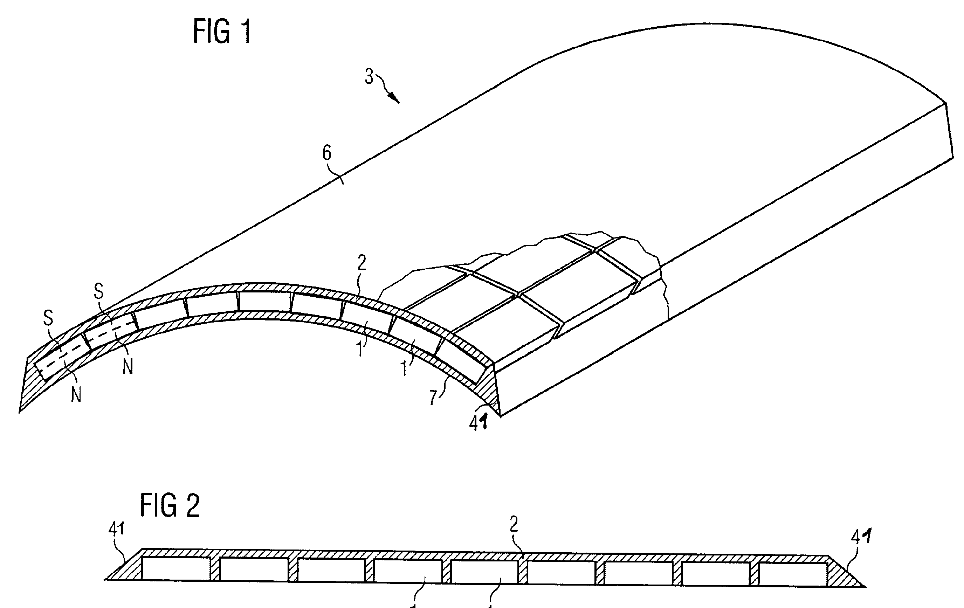

- FIG 1, 2, 3, 5, 6, 8: zeigen konkrete Ausführungen, die nicht Gegenstand der Erfindung sind; wobei die dort erwähnten technischen Zusammenhänge auch für die erfindungsgemäßen Anordnungen gelten.

FIG 1 zeigt ein erfindungsgemäße Anordnung 3 mit im Wesentlichen quaderförmigen Permanentmagneten 1, die in einen Verguss 2 gebettet sind, der sich sandwichartig zwischen zwei unterschiedlichen Trägermaterialien 6 und 7 angeordnet ist. Dabei ist das Trägermaterial 6 aus amagnetischem und das Trägermaterial 7 aus weichmagnetischem Werkstoff. Der Verguss 2 dient dabei der zusätzlichen Stabilisierung der Anordnung 3. Ohne Verguss 2 sind die Permanentmagnete 1 zumindest an einem Trägermaterial 6 oder 7 vorzugsweise durch einen Kleber fixiert. Die Anordnung 3 ist leicht konkav gebogen und weist an ihren Enden formschlüssige Elemente 41 auf, die es ermöglichen, derartige Anordnungen 3 auf eine nicht näher dargestellte Welle vorzugsweise eine Hohlwelle in korrespondierenden Ausnehmungen einzusetzen. Die formschlüssigen Elemente 4 verlaufen dabei nicht notwendigerweise entlang der gesamten Anordnung 3. Die in FIG 1 gezeigte Anordnung kann ebenso als ebene Anordnung gemäß FIG 2 ausgeführt sein und somit bei Linearmotoren eingesetzt werden.

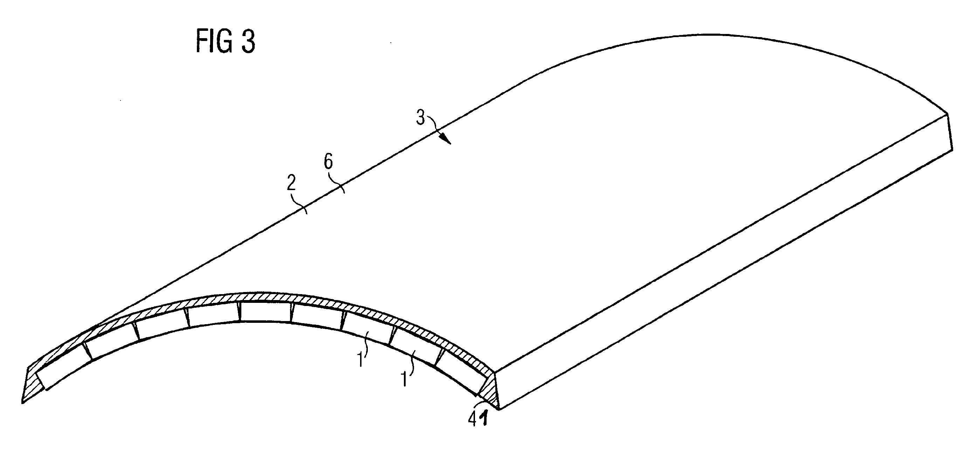

Es ist ebenso möglich gemäß FIG 3 nicht die gesamten Permanentmagnete 1 in einen Verguss 2 zwischen zwei Trägermaterialien 6, 7 einzubetten, sondern nur z.B. die obere Hälfte der Permanentmagnete 1, die dem Luftspalt der elektrischen Maschine zugewandt sind.

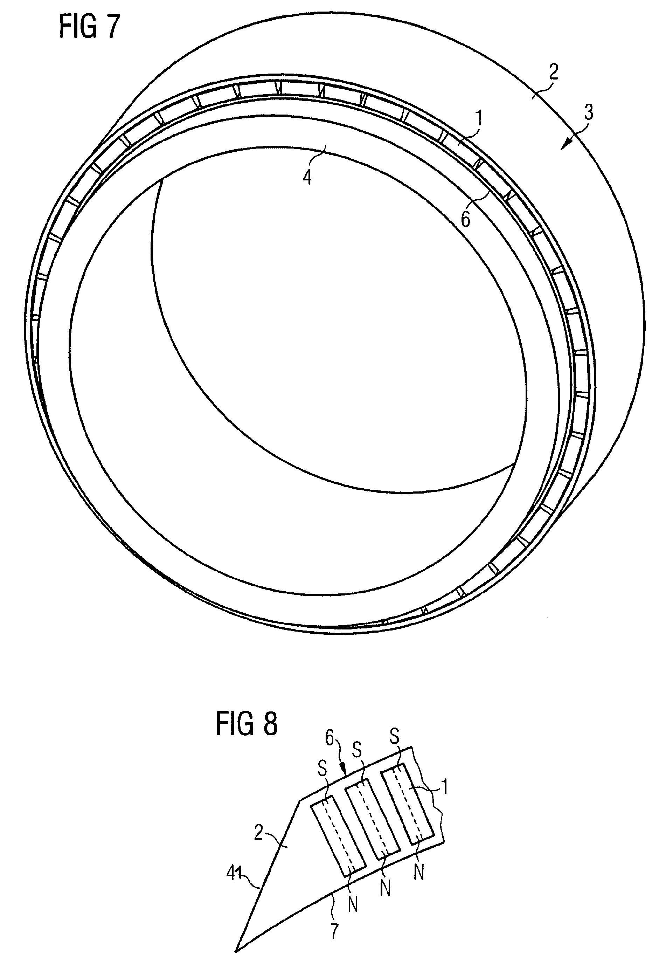

FIG 4 zeigt eine kreisförmige Anordnung von Permanentmagneten die zwischen zwei Trägermaterialien 6 und 7 angeordnet sind, wobei der Zwischenraum zwischen den Permanentmagneten durch einen Verguss 2 ausgegossen ist. Diese hülsenförmige Anordnung nach FIG 4 wird auf eine Welle 4 geschrumpft, so dass sich ein Gebilde nach FIG 7 ergibt.

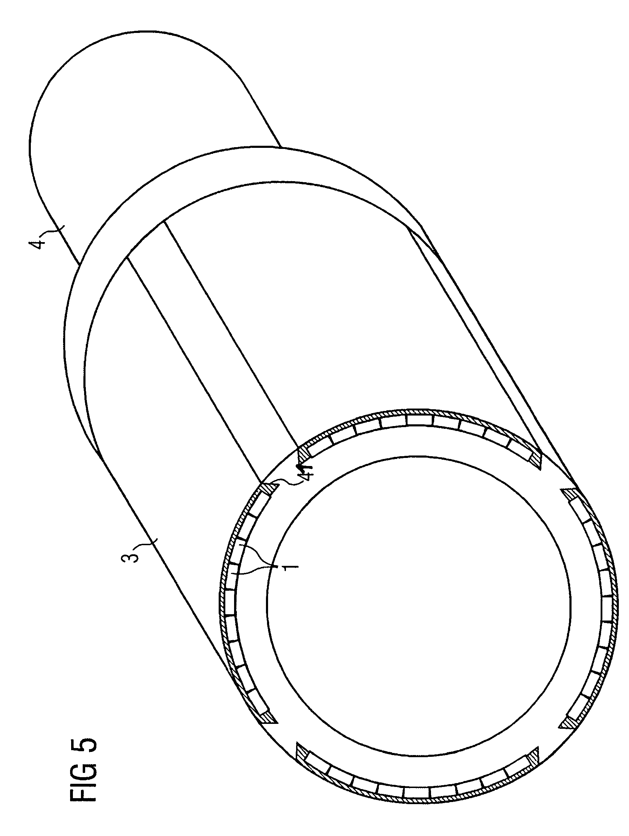

Gemäß FIG 5 werden Anordnungen gemäß FIG 1 auf eine Welle 4 durch schwalbenschwanzartige Elemente 41 fixiert. Dies gestattet eine einfache Montage der Anordnungen 3 beim Kunden auf eine Welle 4. Der magnetische Rückschluss findet über die Welle 4 statt.

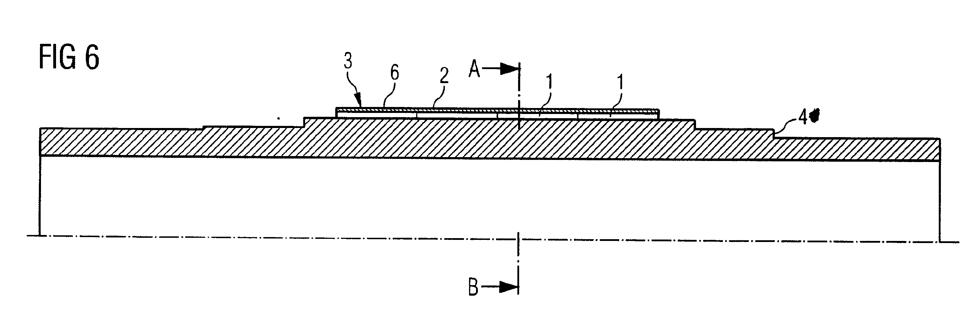

In einem Längsschnitt gemäß FIG 6 wird die Welle 4 dargestellt mit einer Anordnung 3, die auf ein Trägermaterial 2 angebrachte Permanentmagnete 1 zeigt. Dabei ist die Welle als Hohlwelle ausgeführt, wie sie u.a. bei Werkzeugmaschinen und Antrieben elektrischer Bahnen auftritt.

Die dargestellten Ausführungsformen zeigen Permanentmagnete 1, bei denen eine gedachte Trennungslinie zwischen Nord- und Südpol parallel zum Luftspalt der elektrischen Maschine verläuft. Es sind ebenso Permamentmagnete 1 in Flußkonzentrationsanordnung als Bestandteil einer Anordnung 3 gemäß FIG 8 vorstellbar. Dabei ist darauf zu achten, dass keine magnetischen Kurzschlüsse geschaffen werden.

## Patentansprüche

1) Kreisförmige Anordnung (3) von Permanentmagneten (1) für einen Läufer, wobei die Permanentmagnete (1) zwischen zwei dünnen Hülsen positioniert sind, wobei die innere Hülse aus weichmagnetischem Material ist und insbesondere 0,5 mm dick ist, und die äußere Hülse aus amagnetischem Material ist und insbesondere 0,5 bis 1,0 mm dick ist, wobei die Wandstärken der Hülsen sehr viel dünner als die radiale Dicke der Permanentmagnete (1) mit insbesondere 3,5 mm sind, so dass im montierten Zustand der magnetische Rückfluss der Permanentmagnete (1) über eine Stelle (4) des Läufers erfolgt.

2. Kreisförmige Anordnung (3) nach Anspruch 1, **dadurch gekennzeichnet, dass** die Permanentmagnete (1) in Flußkonzentrationsrichtung angeordnet sind.

3. Kreisförmige Anordnung (3) nach Anspruch 1, **dadurch gekennzeichnet, dass** das amagnetische Material mit Kohlefaseranteilen versehen ist.

4. Kreisförmige Anordnung nach einem der vorhergehenden Ansprüche, **dadurch gekennzeichnet, dass** die Permanentmagnete (1) in einem Verguss eingebettet sind.

5. Permanenterregter Synchronmotor mit einem Läufer, **dadurch gekennzeichnet, dass** der Läufer eine Anordnung (3) nach einem der vorhergehenden Ansprüche 1 bis 4 aufweist.

6. Permanenterregter Synchronmotor nach Anspruch 5, **dadurch gekennzeichnet, dass** die Anordnung (3) auf eine Welle (4) aufgeschrumpft ist und somit eine Läufereinheit bildet.

7. Verwendung eines permanenterregten Synchronmotors nach Anspruch 5,6 bei Synchronhohlwellenantrieben in Werkzeugmaschinen und elektrischen Triebfahrzeugen.

## Claims

1. Circular arrangement (3) of permanent magnets (1) for a rotor, with the permanent magnets (1) being position between two thin sleeves, with the inner sleeve being a soft-magnetic material and being in particular 0.5 mm thick and the outer sleeve being an amagnetic material and being in particular 0.5 to 1.0 mm thick, with the wall thickness of the sleeves being significantly thinner than the radial thickness of the permanent magnets (1) with in particular 3.5 mm, so that in an assembled state, the magnetic return flux of the permanent magnets (1) is realized via a shaft (4) of the rotor.

2. Circular arrangement (3) according to claim 1, **characterized in that** the permanent magnets (1) are arranged in flux concentration mode.

3. Circular arrangement (3) according to claim 1, **characterized in that** amagnetic material is provided with carbon-fibre material.

4. Circular arrangement according to one of the preceding claims, **characterized in that** the permanent magnets (1) are embedded in a casting compound.

5. Permanent-magnet excited synchronous motor with a rotor, **characterised in that** the rotor comprises an arrangement (3) according to one of the preceding claims 1 to 4.

6. Permanent-magnet excited synchronous motor according to claim 5, **characterized in that** the arrangement (3) is shrunk onto a shaft (4) and thus forms a rotor unit.

7. Use of a permanent-magnet excited synchronous motor according to claim 5, 6 in synchronous hollow shaft units in machine tools and drives of electrical traction vehicles.

## Revendications

1. Agencement circulaire (3) d'aimants permanents (1) pour un rotor, les aimants permanents (1) étant positionnés entre deux manchons minces, le manchon intérieur étant en un matériau magnétique doux et ayant notamment une épaisseur de 0,5 mm et le manchon extérieur étant en un matériau amagnétique et ayant notamment une épaisseur de 0,5 à 1,0 mm, les épaisseurs de parois des manchons étant beaucoup plus minces que l'épaisseur radiale des aimants permanents (1) de 3,5 mm notamment de telle sorte que, à l'état monté, le reflux magnétique des aimants permanents (1) s'effectue par l'intermédiaire d'un arbre (4) du rotor.

2. Agencement circulaire (3) selon la revendication 1, **caractérisé par le fait que** les aimants permanents (1) sont agencés dans la direction de concentration de flux.

3. Agencement circulaire (3) selon la revendication 1, **caractérisé par le fait que** le matériau amagnétique est muni de fibres de carbone.

4. Agencement circulaire selon l'une des revendications précédentes, **caractérisé par le fait que** les aimants permanents (1) sont noyés dans un matériau coulé.

5. Moteur synchrone à aimant permanent avec un rotor, **caractérisé par le fait que** le rotor comporte un agencement (3) selon l'une des revendications précédentes 1 à 4.

6. Moteur synchrone à aimant permanent selon la revendication 5, **caractérisé par le fait que** l'agencement (3) est fretté sur un arbre (4) et forme donc une unité rotorique.

7. Utilisation d'un moteur synchrone à aimant permanent selon la revendication 5, 6 dans des dispositifs d'entraînement synchrones à arbre creux dans des machines-outils et dans des véhicules moteurs électriques.
